# EUROPEAN PATENT SPECIFICATION

(11) **EP 1 901 181 B1**
(45) Date of publication and mention of the grant of the patent: **07.07.2010**
(21) Application number: 06300945.0
(22) Date of filing: 13.09.2006
(51) Int. Cl.: G06F 17/30

(54) **Discovery Web Service**
Entdeckung von Web-Diensten
Découverte de service web

(43) Date of publication of application: 19.03.2008
(73) Proprietor: Alcatel Lucent, 75008 Paris (FR)
(72) Inventor: Theeten, Bart, 9041, Oostakker (BE); Vanderfeesten, David, 3600, Genk (BE)
(74) Representative: Rausch, Gabriele

(56) References cited:
- US-B1- 7 007 275
- GUSTAVO ALONSO ET AL.: "Web Services" 2004, SPRINGER , BERLIN , XP002419293 ISBN: 3-540-44008-9 * page 174 - page 191 *

## Description

The invention relates to an arrangement for invoking a requested service in a Service-Oriented Architecture (SOA). The invention also relates to a method for invoking a requested service, a discovery service, a corresponding computer software product, and a server host.

Current services technologies are primarily focused on the functionality of services. A significant portion of the available services, however, exhibits a data-driven rather than a functionality-driven character, which makes the current technology less appropriate. This application focuses on discovery especially for data-driven service.

Services in the context of service-oriented architectures, or more specifically web services, are typically characterized by the functions they support. The development and use of services is functionality-driven: services are defined, searched for and connected with, based on their functionality.

Data is also often managed within a service, but this is part of the functional "view" of the service. For some types of services however, the functionality closely resembles the management of the service's data. Most operations of a typical calendar service, for instance, are concerned with data management rather than with functionality based on this data. These services are data-driven rather than functionality driven. Recently, the data-driven approach for services is gaining importance, illustrated, for instance, by many on-line services providing a representational state transfer application programmer interface, which favors this approach.

Let's consider the case of federation between Web Services in a Service-oriented Architecture. A web service is a functional entity addressable over the Internet, which publishes the functionality it provides in an XML-formatted interface description document, a WSDL document.

For two web services to be able to communicate with each other, they must agree on a common protocol, typically SOAP, and a common understanding of the message contents, i.e. the interface.

In a SOA (Service Oriented Architecture), services are loosely coupled, meaning that they are typically developed independently from each other, and therefore don't necessarily have an agreed upon common interface. Therefore, a mapping must be performed to make sure that a providing web service understands a message sent by a consuming web service. This mapping typically takes the form of an XSLT transformation.

The invention is of particular interest to (but not limited to) a data federation system, in which a message destined for a particular service may need to be forwarded to one or more other services as well, because the message may impact data these services have in common. In this case, the invention is preferably implemented in a discovery service like UDDI or ebXML Registry, as a part of the overall service infrastructure.

A typical embodiment of an SOA is an enterprise service bus (ESB). An ESB is a distributed and standards-based integration platform that foresees in messaging, intelligent routing and transformation capabilities to reliably connect and coordinate the interaction of services. As illustrated above, in such a setting there is also a need to focus on the available data besides the functionality. In summary, the management of data available on a service bus introduces different kinds of problems:
- data is spread out, and often duplicated, between the services registered on the bus;
- services manipulate similar data that resides at different locations and, hence, synchronization of these (semantically equivalent) data items is an issue; and
- data models of interacting services are not compatible and need to be bridged.

The World Wide Web Consortium (W3C) defined a (web) service as a part of a software system designed to support interoperable machine-to-machine interaction over a network. It has an interface that is described in a machine-readable format such as web service description language (WSDL). Other systems interact with the Web service in a manner prescribed by its interface using messages, which may be enclosed in a simple object application protocol (SOAP) envelope, or follow a Restful (Representational State Transfer (REST)) approach. These messages are typically conveyed using Hypertext Transfer Protocol (HTTP), and normally comprise Extensible Mark-up Language (XML) in conjunction with other Web-related standards. Software applications written in various programming languages and running on various platforms can use (web) services to exchange data over computer networks like the Internet in a manner similar to inter-process communication on a single computer.

Web Services Description Language (WSDL) is an XML format published for describing web services. WSDL is an XML-based service description on how to communicate using the web service; namely, the protocol bindings and message formats required to interact with the web services listed in its directory. The supported operations and messages are described abstractly, and then bound to a concrete network protocol and message format. This means that WSDL describes the public interface to a web service.

WSDL is used in combination with SOAP and XML schema to provide web services over the Internet. A client program connecting to a web service can read the WSDL to determine what functions are available on the server. Any special data types used are embedded in the WSDL file in the form of XML schema. A client can then use SOAP to actually call one of the functions listed in the WSDL.

UDDI is an acronym for Universal Description, Discovery, and Integration is a platform-independent, XML-based registry for businesses worldwide to list themselves on the Internet. UDDI is an open industry initiative enabling businesses to publish service listings and discover each other and define how the services or software applications interact over the Internet providing address, contact, and known identifiers; industrial categorizations based on standard taxonomies; and technical information about services.

UDDI is designed to be interrogated by SOAP messages and to provide access to Web Services Description Language documents describing the protocol bindings and message formats required to interact with the web services listed in its directory, see http://uddi.org/pubs/uddi v3.htm

Extensible Style-sheet Language Transformations (XSLT) is an XML-based language used for the transformation of XML documents. It is a AWK-inspired XML-dedicated filter language, and a functional language.

In document Gustavo Alonso at al "Web Services" 2004, Springer, Berlin, UDDI universal description discovery and integration is described. Web services descriptions in the UDDEI registry contain T-models. T-models can themselves reference other T-models.

XSLT is a standard that allows one to map a certain XML document into another XML document. XSLT is often used in the service context to convert data between different XML schemas or to convert XML data. XSLT scripts must typically be constructed manually, either by writing the XSLT script itself, or by using a tool to assist the generation of such an XSLT script. The latter is typically achieved by drawing links between fields in graphical representations of XML documents, but the explicit need to link each field makes for a cumbersome process.

The current invention extends the functionality of a typical discovery service such as the above mentioned UDDI or a CORBA naming service to not just return a reference to a service based on semantic queries, i.e. the functionality requested from that service by a particular client application, but in addition to return a reference on a searched service, to also return what needs to be done to a message addressed to that searched service, before it can be delivered to it.

This is of great value when a message cannot be understood by the searched service that may provide the functionality the client is interested in, because the message is in a different format / different protocol / destined for a different interface. The discovery service according to the invention, gathers sufficient information for even to derive a route of services the message must pass through, each service in that route performing the necessary adaptations to the message, i.e. format adaptation, e.g. XSLT transformation, protocol transformation, e.g. SOAP/HTTP to SOAP/JMS, interface adaptation, e.g. XSLT transformation.

According to prior art, a typical scenario was: contact UDDI, providing a semantic description of what the service should offer, retrieve a WSDL description of a service that offers the requested functionality, and code a client application conforming the WSDL description. Discover the run-time reference from UDDI and invoke the target service.

According to the invention it is possible to contact a UDDI with a message that should be understood by some service, accompanied by a semantic description of the method, then retrieve a reference to a target service plus the path to follow to adapt the message to the actual interface of the returned service. Then it is possible to forward the message to the target service, via the path that was discovered.

Thus the contribution of the invention is a one-step approach for making use of a service discovery vis-a-vis the off-line step plus an on-line step according to prior art.

This improvement is reached by arrangement for invoking a requested service, the arrangement comprises a discovery service. The discovery service comprises storage means for storing a data model of at least one service and retrieval means for retrieving a service (2103, 2104, 2105), where the storage means are adapted to store relationships between services. The discovery service comprises in advance retrieval means for retrieving a path of multiple services in said data model, where the concatenation of the services correspond to the requested service.

A discovery, i.e. a method for invoking a requested service is performed by retrieving a service corresponding to the requested service by discovering a data model of at least one service and invoking the retrieved service, where the retrieving in advance comprises a path of multiple services in said data model, where the concatenation of the services correspond to the requested service. Finally the retrieved services on the path are invoked consecutively.

And the invention is implemented in a computer software product comprising programming means for performing the above method.

In other words the invention enables a data federation approach on a service-level. The main advantages of a data federation are a mediation between services: the services on the bus are provided by a third party and are deployed without a priori agreements. As a result, the services do not need to be conform to a common data model. Because of this, the data federation could operate as a mediator between these services.

Data-based composition: besides the explicit functionality-based composition of services, services can be composed based on related data models. An example use of data federation is the synchronization between services with overlapping data models.

Consider, for example, an address book and an instant messaging service, that are independently deployed. A client could wish to change the address of one of the entries in the address book. The instant messaging service in its turn stores a collection of Vcards, which also contain address information. In a data federation environment, it could become possible that, when the address of an address book entry is about to change, a corresponding Vcard in the instant messaging service is updated as well.

The idea is to use metadata to automate the generation of transformation in order to map the XML document associated with a web service into another semantically equivalent web service.

There are various types of metadata that can assist in this automation: The WSDL document describing a public web service interface lists all methods supported on that interface. When these methods are strongly typed, a data model, corresponding to the method attributes / arguments, can automatically be extracted from the WSDL specification. Optionally, an administrator / integrator / service provider can provide additional configuration files such as deployment descriptors, further detailing the behavior of the web service.

The classification of data exposed through web services into an ontology description, can be considered as another type of metadata, facilitating the mapping of differently named, but semantically related data fields. An ontology description usually takes the form of a taxonomy defining classes and relations among them. The meaning of terms of objects, attributes, methods and their arguments, data model fields etc. can be resolved, if they point to a particular ontology that is defining equivalence relationships, i.e. a context.

Finally, a semantic description of the interface can be provided, for example to denote whether a method performs a read-only or read-write operation.

The object of the invention is solved by the subject matter of the appended claims.

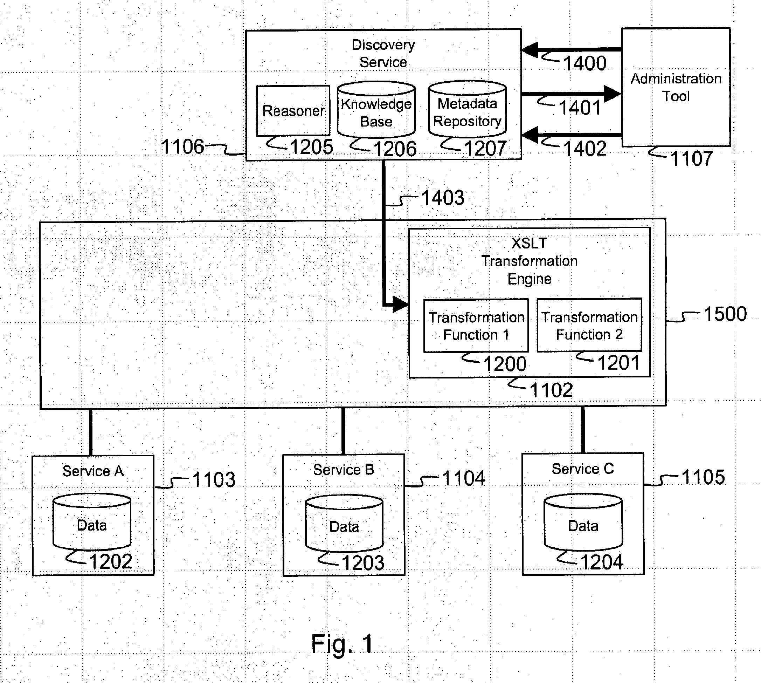

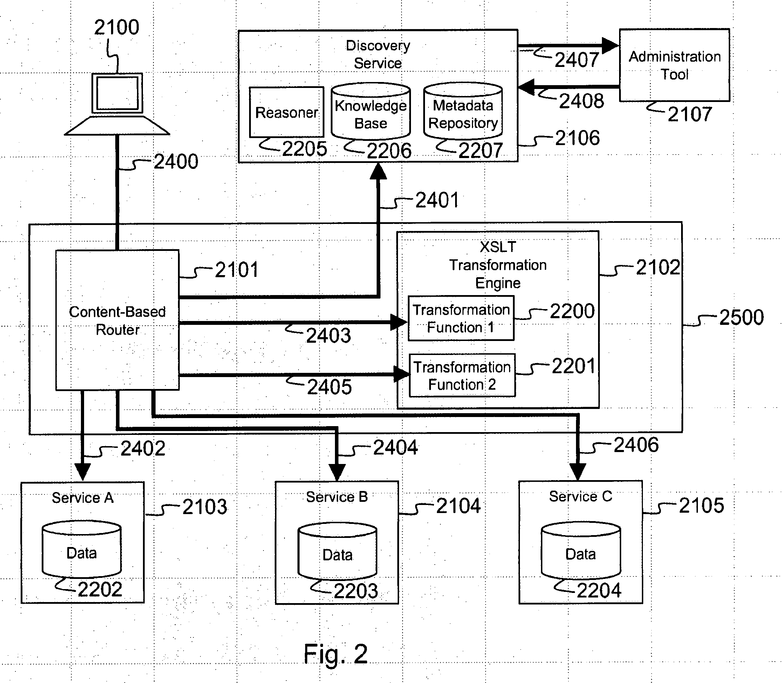

The invention is described in detail with the figures, where Fig. 1 and 2 show arrangements according to the invention.
Fig. 3 shows a data federation method according to the invention.
Fig. 4 and 5 show high level architectures of a discovery service according to the invention.
Fig. 6 shows a discovered service network stored by a discovery service according to the invention.
Fig. 7 to 10 illustrate how the information of the discovered service network could advance a service invocation
Fig. 11 shows how the information about a service is integrated with the data federation method according to the invention.

A basic scenario is illustrated by Fig.1. In the figure, two services 1103 and 1104 have already been deployed on the service infrastructure 1500. As a consequence, a discovery service 1106 already has information about the data models of the services 1103 and 1104 in its knowledge base 1206 and metadata repository 1207. It is also assumed that all three services in the picture 1103, 1104, and 1105 have overlapping data models 1202, 1203 and 1204. Therefore, a transformation function 1200 has already been deduced by the system and this transformation function was deployed on a transformation engine 1102.

The scenario continues with the deployment of an additional service 1105 on the service infrastructure 1500. An administrator deploys a new service 1105 on the service infrastructure 1500.

Therefore, the administrator provides the WSDL interface of the service as well as the package corresponding to the service implementation to an administration tool 1107. The administration tool 1107 sends a request 1400 to the discovery service 1106. The discovery service parses the WSDL interface and extracts a data model out of this document.

The data model consists of data structures corresponding to the methods defined on the WSDL interface as well as the method argument data structures, described as XML schema in the WSDL document. This data model is stored in the metadata repository 1207.

The discovery service 1106 consults its knowledge base 1206 containing an ontology and/or semantic definitions of the data structures or similar ones inserted in the model during previous service deployments, i.e. when deploying, the service 1103 or 1104 tries to resolve any dependencies and relationships between the new service data model and what it already had discovered previously.

When new data structures or particular fields in those data structures remain unresolved, i.e. can't be related to any existing ontology, the operator is requested 1401 to provide additional ontology descriptions for them, through the administration tool 1107.

The administration tool replies 1402 with the new associations. They are stored by the discovery service 1106 in the knowledge base 1206.

When all data structures and fields have been classified, relationships are searched between data structures by a reasoner 1205. That is a kind of type inference mechanism.

For such a relationship, the system tries to automatically construct the mapping function, based on previously discovered relationships between individual fields of composite data structures.

A manual verification step may be required to make sure that the automatically generated mappings are accurate. Additionally, manual intervention may be required for complex mapping scenarios that cannot easily be handled by an XSLT script or that require additional information to be retrieved from external systems, such as attribute providers.

When relationships cannot be fully resolved automatically, the operator could again be asked 1401 to provide a mapping. This mapping is stored in the discovery service 1106 knowledge base 1206.

The associated mapping function is deployed 1403 in the transformation engine 1102, so that it becomes available as a service 1201 in the service infrastructure, through which a message should be routed, in order to be transformed accordingly.

As more and more relationships are found between individual data structure fields, future service deployments will be able to profit from this information, so that the process becomes more and more automatic.

Fig. 2 illustrates a run-time scenario in which a message 2400 is sent by a client application or another service 2100, to service A 2103. This message corresponds to a request to update a data record stored in database 2202 of service A 2103. The scenario further assumes that both service B 2104 and service C 2105 share the data being updated by the message 2400, in their respective databases 2203 and 2204.

All services 2103, 2104 and 2105 are connected to a service infrastructure 2500. This could be an enterprise service bus or an equivalent message broker. The service infrastructure contains a content-based router 2101 by which all requests destined for services 2103, 2104, and 2105 deployed on the service infrastructure 2500 are intercepted and routed.

Upon receiving message 2400 from client 2100, the content-based router 2101 first consults the discovery service 2106 to find out whether other services are impacted by the update operation associated with the message 2400, before routing the message 2400 to its intended destination (service 2103), as indicated by arrow 2402 in the figure.

In this example scenario, the discovery service 2106 responds with 2 routes: one route via a first transformation function 2200 towards target service 2104, and one route via a second transformation function 2201 towards target service 2105. Each transformation function transforms the original message 2400 to an equivalent message, i.e. a message with the effect to cause the same updates to the shared data in the databases 2203 and 2204 of the impacted services 2104 and 2105 that complies to the interface exposed by each impacted service 2104 and 2105, as indicated by the arrows 2404 and 2406 respectively.

The content-based router 2101 receiving the routes from the discovery service 2106, first forwards the original message 2400 to its originally intended target service 2103, as indicated by arrow 2402. Then, the content-based router 2101 processes the first route, by first sending the message 2400 to the first transformation function 2200 as indicated by arrow 2403, and next sending the resulting, i.e. transformed message, to service B 2104 as indicated by arrow 2404. Finally, the content-based router 2101 processes the second route, by first sending the message 2400 to the second transformation function 2201, as indicated by arrow 2405, and next sending the resulting, i.e. transformed, message to service C 2105.

Both services 2104 and 2105 perform the logic associated with messages 2404 and 2406 respectively, i.e. they update their data stores 2203 and 2204, respectively.

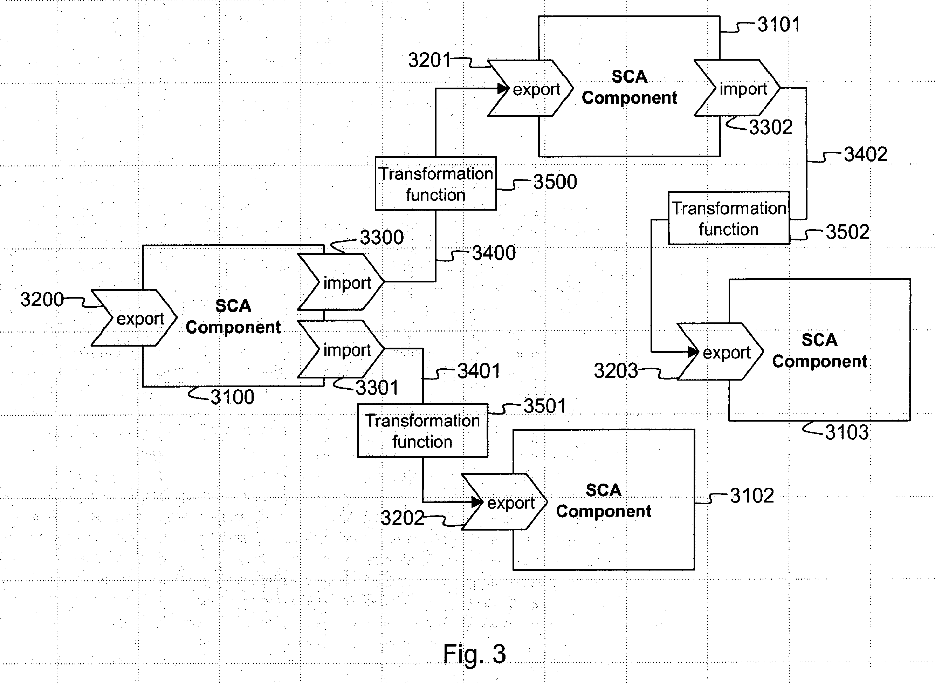

Another area where this invention is of importance is in an SCA-compliant (Service Component Architecture) service environment, see Fig. 3, where services/components 3100, 3101, 3102, and 3103 declare both imports 3300, 3301, and 3302, i.e. the interface they expect another component to provide, and exports 3200, 3201, 3202, and 3203, i.e. the interface the component itself provides to other components, and in which imports 3300, 3301, and 3302 are being linked / bound 3400, 3401, and 3402 to exports 3200, 3201, 3202, and 3203 in order to compose a new component/service offering a particular functionality.

At least one transformation function (including the identity) 3500, 3501, and 3502 is associated with a link /binding 3400, 3401, and 3402.

In the context of the ESB environment, a dedicated Federated Data Manager (FDM) can significantly help to realize this data federation model. Conceptually, a FDM can be thought of as consisting of a discovery service, a retrieval service, and a provisioning services.

Discovery means to locate the data available on the bus and maintaining a model that represents this data, retrieval or query is to support integrated queries that search over different services and data models, and provisioning to provide the data for newly registered services based on data already available on the bus.

An FDM could be also used for synchronization, that is to keep similar data in a consistent state.

Traditional service discovery, as provided by UDDI enables businesses to publish service listings and discover services from other businesses. The meta data available in the registry is suited to describe and search for services. It is rather limited and mainly concerns businesses, protocols and standard classifications, even enriched with semantic denotations.

In the light of data-driven services, this discovery functionality is not sufficient. A contribution of this invention is the analysis of the requirements of data-driven service discovery and the presentation of a general model of such an advanced discovery service.

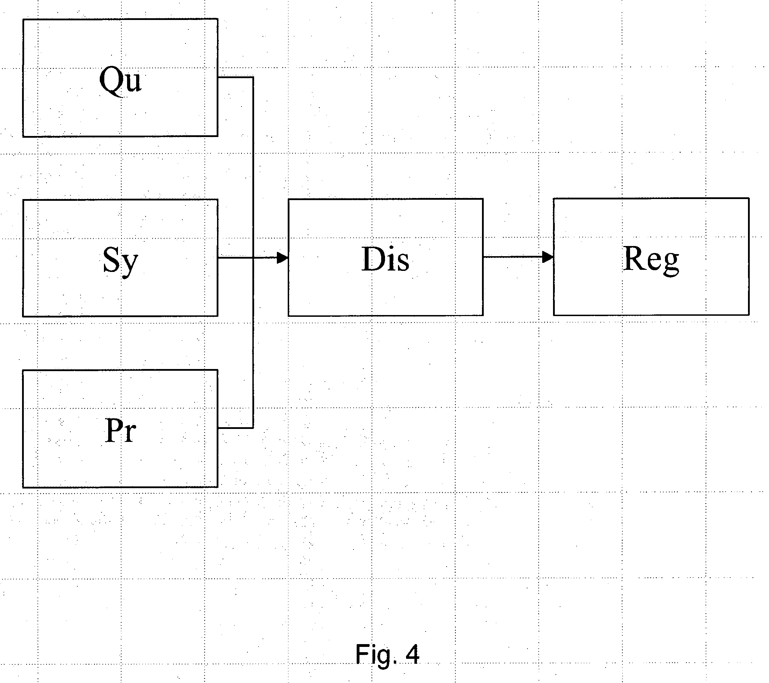

An FDM Reg is illustrated in Fig. 4. A discovery service Dis could be regarded as a part of a FDM. It is responsible for discovering and locating services and their data usage, based on those services' data models. The data model of a particular service has to be based on its interface. The discovery service should inspect the service's interface (or any additional specification for that matter) and infer the data model from this description.

For data-driven service discovery, it is necessary to define relationships between data types in order to support the integration of the data models of the different services. Whenever a new service is registered with the discovery service, the discovery service will update the data model and discover and instantiate new relationships.

As an extension, meta data could be used for these data types and relationships to add support for a classification model leading to more semantic data discovery, i.e. discussing on a meta level, e.g., to locate a service that deals with multimedia content rather than just looking for content like movies or books.

Regarding FDM service mediation, it is necessary for the discovery service to know the semantic differences between related data-types. For instance, the format of address information used by an address book service might differ from an instant messaging service by the order in which data fields are stored, or by information that is represented as separate data fields in one type versus aggregated fields in the other type.

Hence, in addition to the relations between different data types, the discovery service should preferably incorporate knowledge of how to convert or transform these data types. This can be achieved by associating every data relationship with (knowledge on how to make use of) a transformation service, which is able to convert one data type in the relationship to the other and vice versa, depending on whether the relationship is unidirectional or not.

The discovery service is able to navigate through the resulting data model and deduce how to map one service on another via their data models using these transformations. In this context the term route is also used for such mappings. A primary use of those routes is the autonomous synchronization Sy of data between incorporated services.

In summary, such a database discovery consists of three major activities:
- Extracting the data model from the interface of registering services
- Relating the extracted data model to the data model stored in the registry
- Querying the stored data model to discover services based on their data model

When a new service is registered at the discovery service, the interface of the service will be inspected and a data model will be extracted. A number of situations are possible depending on the nature of the interface and the significance of the data part on the interface.

The most difficult case - and currently also the most frequent case since such a data federation is not applied - is the extraction of the data model from a service that is unaware of data federation. The significance of the data part on the interface will be small and the information the discovery service will be able to extract will be rather limited.

For instance, a WSDL description usually contains only a basic description of the data types used on the input or output of the operations of a service. More appropriate for data-driven services is an interface with a separate data interface, describing the data types in more detail and how the different data types can be read or written, i.e. manipulated by using the public access operations.

Getters and setters for properties of JavaBeans components are a good example for such access operations. In the most ideal case, the data types are also described semantically, e.g. using in-lined Web Ontology Language (OWL), constructs, or using a separate OWL file, relating the types to other, known, types or integrating them in a common or standard ontology.

The integration of the service's data model in the currently stored data model boils down to distinguishing between new and already existing data types and identifying relationships between new data types and previously known data types.

The more detailed the information as it is extracted from the interface, the more meaningful the integration of the new data types within the currently stored data model can occur. A dedicating factor here is using explicit types. If, for example, all data of some service is modeled using strings, the discovery service will not be able to infer a lot of meaningful relationships with the data models of other services. The higher the degree of semantics in the interface, the more autonomous the integration can occur. If the new data types are defined independently, without a reference or relation to other types, it is next to impossible to integrate these types fully autonomously. In this case, relating the new types to the stored data model requires world knowledge, provided e.g. by a discovery administrator.

If, however, semantic information is present in the interface, the integration can happen by reasoning over the semantic information present in the registry and the interface. Most likely, this semantic information will come in the form of a reference to a standard or common ontology. In this case, the discovery service can directly extract the correct relationships from this ontology.

For the discovery service to be able to search for related services through their data models, it needs some rules to define which relations at the level of the data model can introduce relations at the level of services.

It can for instance define a set of semantically related operations of a particular operation S as a (transitive) closure of a relation R between operations. An operation X is related to an operation Y if the inputs of X and Y overlap. This could be in the sense that the input type is a subtype or a part of the input.

A more practical approach could consist of a relationship isTransformableTo, which only means that there exists a transformation from one data type to the other. For each of the relationships subtype of, part of, and isTransformableTo, there is an association with a transformation service.

The above definition of related operations then specifies a sequence of transformations to go from one data type or operation to another data type or operation. This sequence of operations is actually the route that is used for the automatic synchronization between services in a data federation manager.

For the example in the case of the address book and the instant messenger, there could be a route from an UpdateAddress operation to a UpdateVCard operation via the transformations that map UpdateAddress to the Address data type, the Address data type to the address type as it is used in the VCard data type and from there, via VCard to updateVCard.

For a concrete implementation, one needs both a data description and a data discovery technology. One can use for instance both WSDL and OWL, without any need for further integration. That is, OWL can be used as such within a WSDL specification, or it can be used as a separate specification file. Regarding the data discovery technology, one can choose for instance ebXML over UDDI, since it offers an much more expressive data model and query application programmer interface.

ebXML could be used as a set of specifications for electronic business collaboration, of which discovery is one part. The registry used by ebXML consists of both a registry and a repository. The repository is capable of storing any type of electronic content, while the registry is capable of storing meta data that describes that content. The content within the repository is referred to as "repository items" while the meta data within the registry is referred to as "registry objects".

The ebXML registry defines a registry information model (RIM) which specifies the standard meta data that may be submitted to the registry. The main features of the information model include:
- A RegistryObject: The top level class in ebRIM is the RegistryObject. This is an abstract base class used by most classes in the model. It provides minimal meta data for registry objects.
- A Classification: Any RegistryObject may be classified using ClassificationSchemes and ClassificationNodes which represent individual class hierarchy elements. A ClassificationScheme defines a tree structure made up of ClassificationNodes. The ClassificationSchemes may be user-defined.
- An Association: Any RegistryObject may be associated with any other RegistryObject using an Association instance where one object is the sourceObject and the other is the targetObject of the Association instance. An Association instance may have an associationType which defines the nature of the association. There are a number of predefined Association Types that a registry must support to be ebXML compliant. ebXML allows this list to be expanded.
- A Service Description, ServiceBinding and SpecificationLink classes provide the ability to define service descriptions including WSDL. ebXML exports two interfaces to use the registry.
- A Life-CycleManager (LCM) is responsible for all object lifecycle management requests.
- A QueryManager (QM) is responsible for handling all query requests. A client uses the operations defined by this service to query the registry and discover objects.

The ebXML query service makes full use of the data model. All information can be used to search for items in the registry, e.g. all RegistryObjects that are associated with a certain item or all Service items that are classified with a certain ClassificationNode. To enhance the data classification model in the ebXML registry with semantic relationships, the constructs available in ebXML can be used. The ebXML registry information model can be used to simulate an OWL description of data classes.

An architecture has been defined for the data discovery service prototype using ebXML as a backbone component.

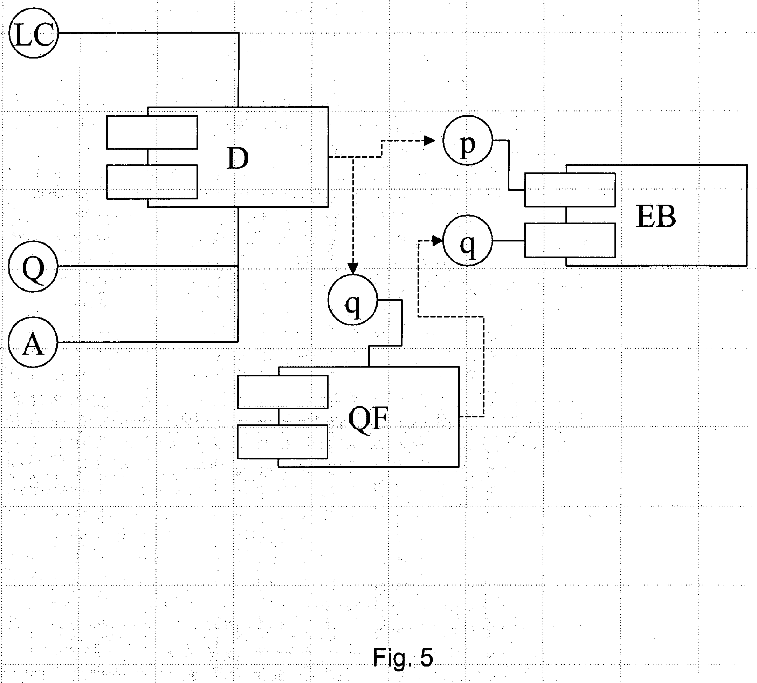

Fig. 5 depicts a high level component view of the architecture. It consists of three components D; QF, and EB. A discovery component D provides three interfaces LC, Q, and A, that are used by other FDM services. A lifecycle interface LC is used for the lifecycle management of registered services. It can be used by the system administrator to subscribe, publish and activate new services. The component will store the service information in the registry based on the description and will propose a data model for the service and relationships with other data types in the registry. The interface also contains an operation for resolving and storing the proposed data relationships. An admin interface A is used for maintenance operations on the registry.

A system administrator will use it for maintenance, especially on the data models and the relationships between them. A query interface Q is used for searching the information stored in the registry. It offers one specific operation, mainly used by the synchronization service to find routes to related services, and one generic operation for structured query language (SQL) like queries as defined in the ebXML standard. A ebXML component EB is a fully ebXML standard compliant registry and discovery service. It will be used by both the discovery component D and third-party clients. The former will use it as a registry that stores the available services together with their data models, including relationships between these models and associated transformations, while the latter can use it as a traditional discovery service. A QueryFacade component QF could handle recursive queries, for example to search through transitive relations. This component is necessary because the ebXML standard specification does not include this functionality.

The interfaces of the discovery component Q, A, and LC mainly use WSDL and OWL formats as input and output, but internally, the discovery registry is based on the ebXML format. Extraction of the data model will thus come down to transforming WSDL and OWL to the ebRIM and ebRS publication format.

Services could be represented with a Service class and the rest of the information from the WSDL comes in the ServiceBinding and SpecificationLink classes. The data model used by the service is mapped to a ClassificationScheme, where each ClassificationNode represents one type in the data model and is associated with the service using a Classification.

For example, the above mentioned address book service could be stored in the ebXML registry. The service is classified with two data types, one for changing address information an another for adding new entries on the address book. Let these types consist of an address type, a person type and strings.

As a new service is published in the registry, the new data model elements should be inserted into the registry and the service's data model should be associated with the data types already stored in the registry. The discovery service might not be able to accomplish the latter fully autonomously. Then it could deduce a set of suggested data type relationships, to be finalized e.g. by a system administrator.

Some simplifications w.r.t. the associations could be based on the full equivalence between data types, e.g. when a type is already available in the registry, its service-specific relations will have to be added to the registry as well. To make this deduction sound and complete, the system administrator could extend the service description with semantic data information by embedding OWL constructs in the WSDL publication.

To search through the model for routes between operations of different services, one can use Floyd-Warshal like algorithms, or one pair shortest path discoveries, i.e. algorithms from the Dijkstra search type.

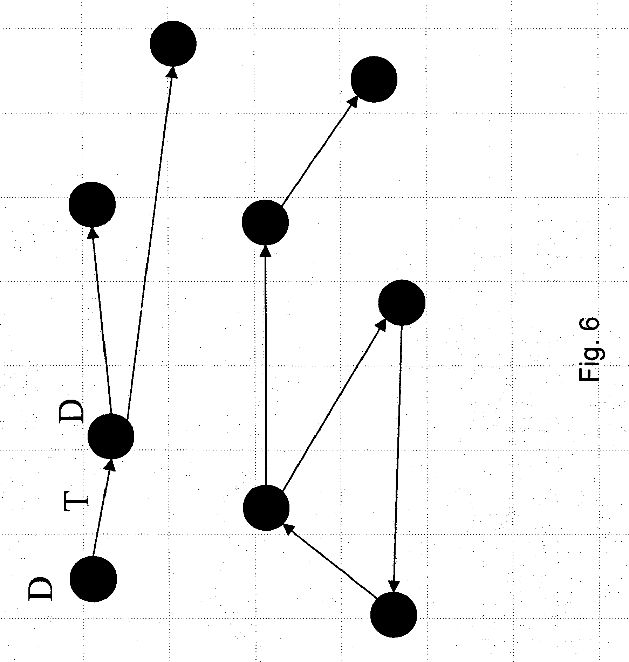

Fig. 6 shows a more abstract presentation of a service network. As mentioned above a service correspond to a function, shown by the arrows T. The services form a category of arrows T, where a service T has an input and an output data types D. These types define the service and vice versa. For a concatenation of two services the types have to be conform, i.e. the types have to match at least by means of conversion functions that could be derived from meta information of the type on a semantic level. A closer look on the bullets would mean that the types form a equivalence class of data presentations that are implemented in the outlined realization as the aforementioned data models.

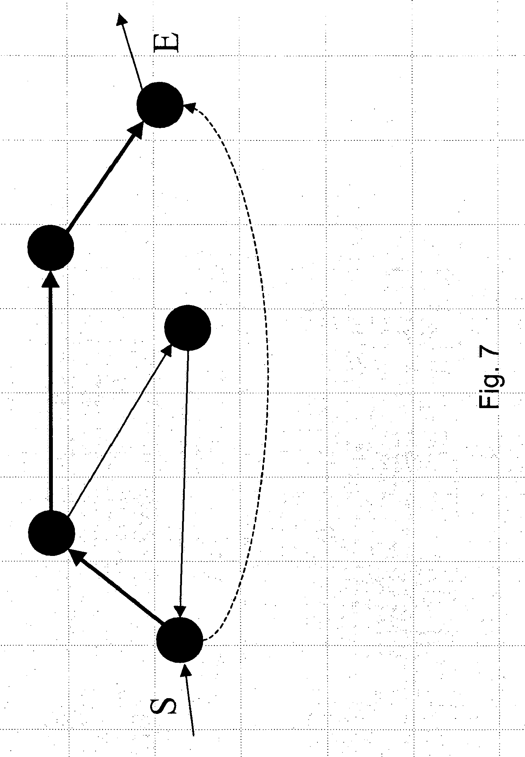

Fig. 7 shows a concatenation scenario, i.e. a successive invocation of services with appropriate, i.e. compatible, interfaces. There is an input type S and a output type E of the resulting (concatenated) service, depicted as a dashed arrow. This (virtual) service is composed of three real services.

The services can be concatenated in the category of arrows. A sequence of concatenated invocations correspond to a path in the graph (bold) having a start S and an end E. The constraint is that the data types need to be consistent, i.e. the Nth arrow ends at a bullet, where the N+1th arrow begins. The path corresponds to a (virtual) service having input type S and output type E (dashed).

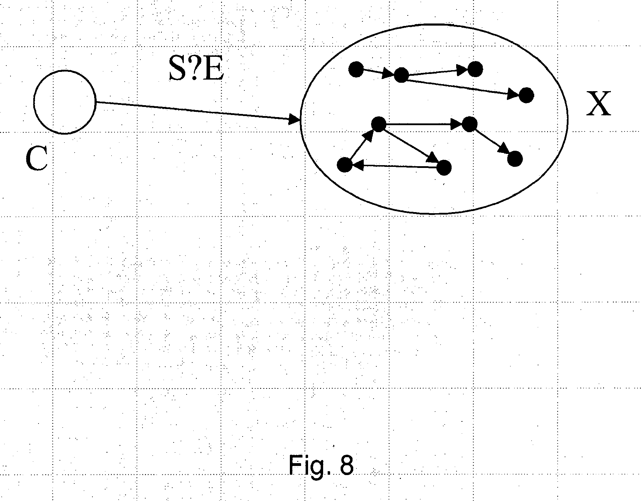

The discovery service according to the invention is aware of the service network shown in Fig. 6. The discovery service X stores a map of the service network, as shown in Fig. 8. A client C could query S?E for instance whether there exists a service defined by the input data type S and the output data type E. The query is illustrated by the connection between the client C and the discovery service X.

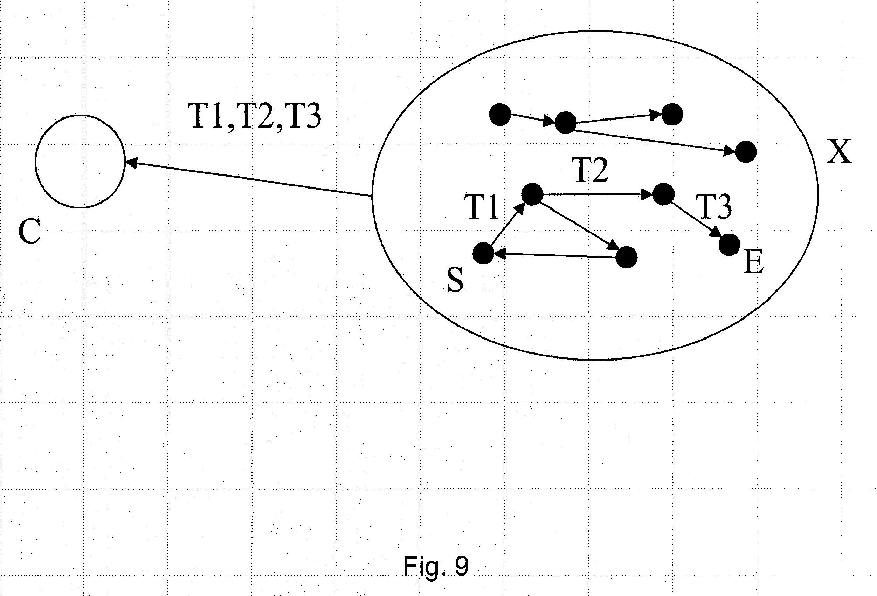

In Fig. 9 it is illustrated how a route through the service network is discovered. The discovery service X has to identify the input and output data types S and E within its map, and the service has to identify a connection between the data types of corresponding points (or equivalence classes), i.e. data models, in the map. This is a path of services T1, T2, and T3 - or in general a set of paths. This information, i.e. the routing information (including optionally data transformations for type conversions) is replied to the client C.

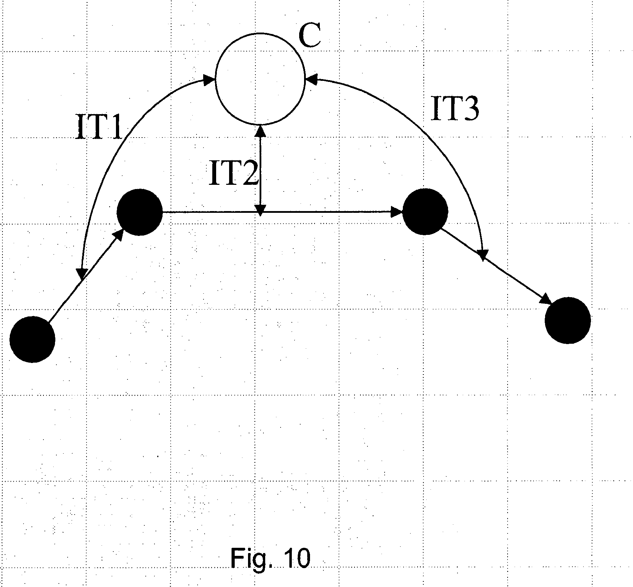

That enables the client to invoke the service chain defined by the path, as shown in Fig. 10. With the input the first service T1 is invoked IT1, with the result of this invocation the second service T2 is invoked IT2, and finally the third service T3 is invoked, yielding to a result of the provided output type E.

To summarize: A client C that seeks for a service with the input data type S and the output data type E can ask the dedicated service X for a sequence of service invocations providing the searched service. The dedicated service X could look up the data types in his memory and can calculate a path, e.g. via Dijkstra's algorithm or by means of a transitive closure via Floyd-Warshal algorithm. That enables the client to invoke the services in a concatenated way ...

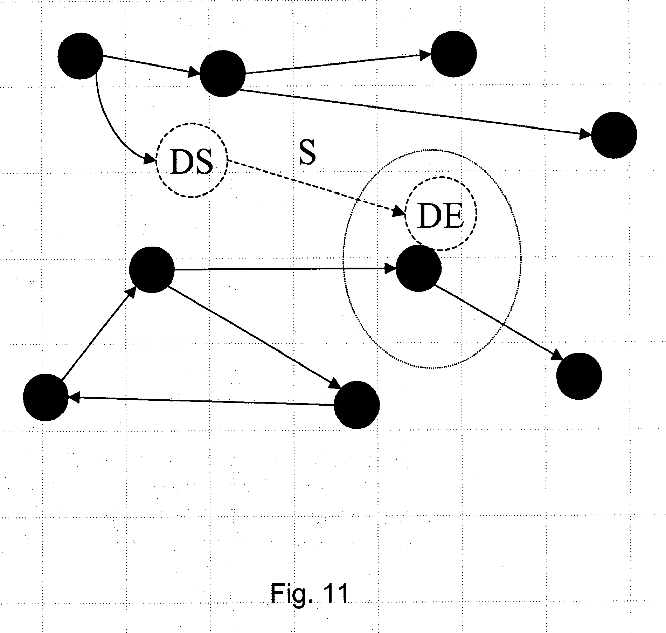

Fig. 11 illustrates how the map stored in the discovery service could be created (incrementally). Suppose, starting from the (already discovered service network, shown in Fig. 6, a new service S has to be registered. This is shown by the dashed arrow. The service has an input data type DS and an output data type DE. A lookup yields that the input data type DS is quite new, i.e. unknown, but from the semantic description a transformation between a known data type and the new data type could be derived. This is memorized by creating a new bullet and a new arrow in the map. The output data type DE could be identified as an already known data type in the example. This is shown by the dotted circle. The map is completed by the integration of the arrow connecting directly the data types DS and DE. Finally the above mentioned discovery service has a consistent and integer picture (model) of the services, the data types, and data type transformations.

This technique enables an arrangement for the adaptation of a message exchanged between a consumer service and multiple provider services in e.g. a service-oriented architecture, where the arrangement includes a discovery service comprising storage means for distinct service data models, each service data model being associated to a provider service, and storage means for relationships between said service data models. That enables a discovery message routes, one message route per provider service, each message route being defined as a sequence of zero or more services invocations, optionally with a transformation that is associated to a data model relationship. The discovery means is able to adapt the message of said consumer service into a message route intended to a designated provider service. Preferably the discovery means is able to include the message of said consumer service as the last provider service in said sequence of the message route.
The discovery means might further comprise a reasoner (2205) adapted to support the automatic deduction of new relationships between service data models based on previously established relationships. The discovery means might be adapted to automatically determine at least one additional target provider service based on the impact of said message, exchanged between said consumer service and said designated provider service, has on the service data models of other provider services in order to support the synchronization of data shared between provider services.

## Claims

1. An arrangement for identifying a data model of at least one service (1103, 1104), where the arrangement comprises a discovery service (1106)
the discovery service (1106) comprises storage means
- for storing data models of the at least one service (1103, 1104) and
- for storing a relationship between the data models, **characterized in that** the arrangement further comprises inspection means
- for extracting a data model of a new service (1105) from the interface of the new service (1105) and
- for establishing relationships between the data model of the new service (1105) and data models of the at least one service (1103, 1104).

2. The arrangement according to claim 1, **characterized in that** said discovery means is adopted to associate a transformation of data types to a relation.

3. The arrangement according to claim 1, **characterized in that** said discovery means comprises a reasoner (1205) adapted to support the automatic deduction of new relationships between service data models based on previously established relationships and semantic descriptions of the service.

4. The arrangement according to claim 1, **characterized by** comprising synchronization means for automatically identifying redundant data based on the data models of the at least one service and the relationship between the data models.

5. A data federation method for identifying a data model of at least one service (1103, 1104), **characterized by the steps of**
- inspecting a new service (1105) and extracting a data model of the new service (1105) from the interface of the new service (1105),
- establishing a relationship between the data models of the at least one service (1103, 1104 and the data model of the new service (1105) and
- providing the data models of these services (1103, 1104, 1105) and the relationship between the data models.

6. A computer software product **characterized by** comprising programming means for performing the data federation method according to claim 5.

## Patentansprüche

1. Eine Anordnung zur Identifizierung eines Datenmodells mindestens eines Dienstes (1103, 1104), wobei die Anordnung einen Entdeckungsdienst (1106) umfasst, wobei der Entdeckungsdienst (1106) Speichermittel umfasst, um
- Datenmodelle des mindestens einen Dienstes (1103, 1104) zu speichern und
- eine Beziehung zwischen den Datenmodellen zu speichern,
**dadurch gekennzeichnet, dass** die Anordnung weiterhin Prüfmittel umfasst, um
- ein Datenmodell eines neuen Dienstes (1105) aus der Schnittstelle des neuen Dienstes (1105) zu extrahieren, und
- Beziehungen zwischen dem Datenmodell des neuen Dienstes (1105) und den Datenmodellen des mindestens einen Dienstes (1103, 1104) festzulegen.

2. Die Anordnung nach Anspruch 1, **dadurch gekennzeichnet, dass** das besagte Entdeckungsmittel dazu ausgelegt ist, einer Beziehung eine Umwandlung von Datentypen zuzuordnen.

3. Die Anordnung nach Anspruch 1, **dadurch gekennzeichnet, dass** das besagte Entdeckungsmittel einen Reasoner (1205) umfasst, der dazu ausgelegt ist, das automatische Ableiten von neuen Beziehungen zwischen Dienst-Datenmodellen auf der Basis von im Vorfeld festgelegten Beziehungen und semantischen Beschreibungen des Dienstes zu unterstützen.

4. Die Anordnung nach Anspruch 1, **dadurch gekennzeichnet, dass** sie Synchronisationsmittel zum automatischen Identifizieren von redundanten Daten auf der Basis der Datenmodelle des mindestens einen Dienstes und der Beziehung zwischen den Datenmodellen umfasst.

5. Ein Data-Federation-Verfahren zum Identifizieren eines Datenmodells mindestens eines Dienstes (1103, 1104), **gekennzeichnet durch die folgenden Schritte:**
- Prüfen eines neuen Dienstes (1105) und Extrahieren eines Datenmodells des neuen Dienstes (1105) aus der Schnittstelle des neuen Dienstes (1105),
- Festlegen einer Beziehung zwischen den Datenmodellen des mindestens einen Dienstes (1103, 1104) und dem Datenmodell des neuen Dienstes (1105), und
- Bereitstellen der Datenmodelle dieser Dienste (1103, 1104, 1105) und der Beziehung zwischen den Datenmodellen.

6. Ein Computersoftware-Produkt, **dadurch gekennzeichnet, dass** es Programmiermittel für das Ausführen des Data-Federation-Verfahrens nach Anspruch 5 umfasst.

## Revendications

1. Arrangement pour identifier un modèle de données d'au moins un service (1103, 1104), l'arrangement comprenant un service de découverte (1106), le service de découverte (1106) comprenant des moyens de stockage pour :
- stocker des modèles de données de l'au moins un service (1103, 1104) et
- pour stocker une relation entre les modèles de données,
**caractérisé en ce que** l'arrangement comprend en outre des moyens d'inspection
- pour extraire un modèle de données d'un nouveau service (1105) à partir de l'interface du nouveau service (1105) et
- pour établir des relations entre le modèle de données du nouveau service (1105) et les modèles de données de l'au moins un service (1103, 1104).

2. Arrangement selon la revendication 1, **caractérisé en ce que** les moyens de découverte sont adaptés pour associer une transformation des types de données à une relation.

3. Arrangement selon la revendication 1, **caractérisé en ce que** les moyens de découverte comprennent un contrôleur de plausibilité (1205) adapté pour prendre en charge la déduction automatique de nouvelles relations entre des modèles de données de service basés sur des relations établies précédemment et des descriptions sémantiques du service.

4. Arrangement selon la revendication 1, **caractérisé en ce qu'**il comprend des moyens de synchronisation pour identifier automatiquement les données redondantes en se basant sur les modèles de données de l'au moins un service et la relation entre les modèles de données.

5. Procédé de fédération de données pour identifier un modèle de données d'au moins un service (1103, 1104), **caractérisé par** les étapes suivantes :
- inspection d'un nouveau service (1105) et extraction d'un modèle de données du nouveau service (1105) à partir de l'interface du nouveau service (1105),
- établissement d'un relation entre les modèles de données de l'au moins un service (1103, 1104) et le modèle de données du nouveau service (1105) et
- fourniture des modèles de données de ces services (1103, 1104, 1105) et de la relation entre les modèles de données.

6. Produit de logiciel informatique **caractérisé en ce qu'**il comprend des moyens de programmation pour mettre en oeuvre le procédé de fédération de données selon la revendication 5.
